# EUROPÄISCHE PATENTSCHRIFT

(11) **EP 4 474 675 B1**
(45) Veröffentlichungstag und Bekanntmachung des Hinweises auf die Patenterteilung: **03.09.2025**
(21) Anmeldenummer: 23177986.9
(22) Anmeldetag: 07.06.2023
(51) Int. Cl.: F16G 13/16, E02D 17/13, E02F 9/22, E02F 3/20, H02G 11/00, H02G 11/02

(54) **VERSORGUNGSBAND, INSBESONDERE FÜR EIN ERDBEARBEITUNGSGERÄT**
SUPPLY BAND, IN PARTICULAR FOR A SOIL WORKING APPARATUS
BANDE D'ALIMENTATION, EN PARTICULIER POUR UN APPAREIL DE TERRASSEMENT

(43) Veröffentlichungstag der Anmeldung: 11.12.2024
(73) Patentinhaber: BAUER Maschinen GmbH, 86529 Schrobenhausen (DE)
(72) Erfinder: Peyerl, Andreas, 86558 Hohenwart (DE)
(74) Vertreter: Wunderlich & Heim Patentanwälte PartG mbB

(56) Entgegenhaltungen:
- EP-A1- 1 826 456
- WO-A1-90/00824
- DE-A1- 19 840 012
- DE-C1- 4 119 211
- GB-A- 951 478

## Beschreibung

Die Erfindung betrifft ein Versorgungsband, insbesondere für ein Erdbearbeitungsgerät, mit mindestens zwei nebeneinander angeordneten Versorgungsleitungen, welche eine bandartige Leitungsanordnung bilden, wobei die Durchmesser der Versorgungsleitungen einen maximalen Leitungsdurchmesser LD nicht überschreiten, zwei seitlichen Führungssträngen, von welchen je ein Führungsstrang entlang jeder Randseite der Leitungsanordnung verläuft und welche jeweils aus formstabilen Segmenten aufgebaut sind, welche bei einem Aufwickeln des Versorgungsbandes übereinanderliegen, wobei zum Schutz der Versorgungsleitungen eine Höhe der Segmente um einen definierten Überstand größer als der maximale Leitungsdurchmesser LD ist, und Querleisten, welche vereinzelt entlang des Versorgungsbandes angeordnet sind und sich quer zu einer Bandlängsrichtung von einem Verbindungssegment des ersten seitlichen Führungsstranges zu einem gegenüberliegenden Verbindungssegment des zweiten seitlichen Führungsstranges erstrecken und diese miteinander verbinden, gemäß dem Oberbegriff des Anspruchs 1.

Ein gattungsgemäßes Versorgungsband für ein Erdbearbeitungsgerät geht beispielsweise aus der EP 1 826 456 A1 hervor. Das Versorgungsband weist mehrere nebeneinander angeordnete Versorgungsleitungen auf, welche eine bandartige Leitungsanordnung bilden. Entlang jeder Randseite der Leitungsanordnung ist ein Führungsstrang angeordnet, welcher kettenartig aus formstabilen Segmenten aufgebaut ist. Zum Schutz der Versorgungsleitungen ist eine Höhe der Segmente um einen definierten Überstand größer als ein maximaler Leitungsdurchmesser der Versorgungsleitungen. Hierdurch können bei einem Auftrommeln des Versorgungsbandes Quetschungen der Versorgungsleitungen vermieden werden, da die übereinander aufgewickelten Lagen im Bereich der größeren seitlichen Führungsstränge aufeinander aufliegen und so die wesentlichen Kräfte in einer radialen Richtung durch die formstabilen Segmente der seitlichen Führungsstränge aufgenommen werden können. Die Höhe der Segmente bestimmt die Höhe des Versorgungsbandes und wird auch als Systemhöhe bezeichnet.

Weiterhin sind Querleisten vereinzelt entlang des Versorgungsbandes angeordnet, welche sich quer zu einer Bandlängsrichtung von einem Segment des ersten seitlichen Führungsstranges zu einem gegenüberliegenden Segment des zweiten seitlichen Führungsstranges erstrecken und diese miteinander verbinden. Die Segmente, welche mit den Querleisten verbunden sind, können als Verbindungssegmente bezeichnet werden. Die Querleisten halten die nebeneinander angeordneten Versorgungsleistungen in Position und können diese zusätzlich fixieren. Auch können die Querleisten die Versorgungsleisten mit den seitlichen Führungssträngen verbinden, so dass sich eine Zugentlastung der Versorgungsleitungen ergibt.

Zu diesem Zweck müssen die Querleisten mit einer ausreichenden mechanischen Festigkeit ausgebildet sein. Für einen möglichst leichten Aufbau des Versorgungsbandes können die Querleisten anstelle von Stahl aus einem Leichtmetall, etwa einer Aluminiumlegierung, gefertigt sein. Aufgrund der begrenzten Festigkeit von Leichtmetall müssen die Querleisten gegen ein Verbiegen oder Brechen mit einer relativ großen Wandstärke ausgebildet werden, was zu einer Erhöhung der seitlichen Segmente und damit der Höhe des Versorgungsbandes führt. Je höher eine Höhe des Versorgungsbandes ist, umso kleiner wird die Bandlänge, welche auf eine Bandtrommel mit einem maximalen Trommeldurchmesser aufgewickelt oder aufgetrommelt werden kann.

Der Erfindung liegt die **Aufgabe** zugrunde, ein Versorgungsband insbesondere für ein Erdbearbeitungsgerät bereitzustellen, welches einerseits eine hohe Stabilität aufweist und andererseits besonders kompakt aufgewickelt werden kann.

Die Erfindung wird durch ein Versorgungsband mit den Merkmalen des Anspruchs 1 gelöst. Bevorzugte Ausführungen der Erfindung sind in den abhängigen Ansprüchen angegeben.

Das erfindungsgemäße Versorgungsband ist dadurch gekennzeichnet, dass die Höhe der Verbindungssegmente gleich der Höhe der weiteren Segmente der Führungsstränge ist und dass die Querleisten im Bereich der Leitungsanordnung der Versorgungsleitungen um einen definierten Vorsprung gegenüber der Höhe der Verbindungssegmente vorstehen.

Eine Grundidee der Erfindung liegt darin, dass die Querleisten im Bereich der Leitungsanordnung der Versorgungsleitungen um einen definierten Vorsprung gegenüber der Höhe der jeweils angrenzenden Verbindungssegmente vorstehen. Die Verbindungssegmente weisen die gleiche Höhe wie die anderen Segmente auf, welche mit keinen Querleisten verbunden sind. Die Gesamthöhe des Versorgungsbandes ist durch die Höhe der Segmente plus den definierten Vorsprung der Querleisten bestimmt. Beim Aufwickeln des Versorgungsbandes wird die Höhe der Wicklung jedoch allein durch die Höhe der Segmente bestimmt. Der Vorsprung der Querleisten kann in den Bereich der Leitungsanordnung mit den Versorgungsleitungen hineinreichen, deren maximaler Durchmesser kleiner als die Höhe der Segmente ist. Der Vorsprung an den Querleisten kann somit diesen bestehenden Freiraum nutzen.

Im Ergebnis können so die Querleisten mit einer ausreichenden Materialstärke und Festigkeit hergestellt werden, ohne dass dies sich negativ auf die Höhe und Anzahl der Wicklungen beim Aufrollen des Versorgungsbandes auf eine Trommel auswirkt. Hierdurch kann auf eine bestehende Schlauch- oder Bandtrommel eine größere Länge an Versorgungband aufgetrommelt werden. Alternativ kann bei gleichbleibender Länge des Versorgungsbandes der Transportdurchmesser der Trommel verringert werden, wodurch in manchen Fällen teure Sondertransporte vermieden werden können.

Zudem ergeben sich durch die kompaktere Anordnung aufgrund des kürzeren Hebels und eines geringeren Gewichts im Betrieb geringere notwendige Drehmomente zum Auf- und Abtrommeln. Außerdem werden Kosten für Material und Fertigung beim Bau des Versorgungsbandes eingespart.

Besonders bevorzugt ist es nach einer Weiterbildung der Erfindung, dass der definierte Vorsprung der Querleisten im Bereich der Leitungsanordnung betragsmäßig gleich oder kleiner als der definierte Überstand der Segmente der Führungsstränge gegenüber den Versorgungsleitungen ist. Auf diese Weise werden Berührungen oder Quetschungen der Versorgungsleitungen in der Leitungsanordnung durch den überstehenden Vorsprung der Querleisten vermieden, was die Leitungen schont.

Grundsätzlich können die Querleisten so ausgebildet sein, dass diese nur zu einer Seite gegenüber den blockartigen Segmenten vorstehen oder in sonstiger Weise asymmetrisch gestaltet sein. Besonders vorteilhaft ist es nach einer Weiterbildung der Erfindung, dass die Querleisten im Bereich der Leitungsanordnung der Versorgungsleitungen zu beiden Seiten um einen definierten Vorsprung gegenüber der Höhe der Verbindungssegmente vorstehen. Hierdurch kann ein bestehender Freiraum an dem Versorgungsband für die Ausbildung der Querleisten beim Auftrommeln besonders zweckmäßig genutzt werden. Die Summe der zu beiden Seiten vorstehenden Vorsprünge soll dabei vorzugsweise betragsmäßig gleich oder kleiner als der definierte Überstand der Segmente der Führungsstränge gegenüber den Versorgungsleitungen sein.

Nach einer weiteren Ausführungsvariante der Erfindung ist es bevorzugt, dass die Querleisten rahmenartig mit zueinander beabstandeten Durchgängen zum Aufnehmen und Halten der Versorgungsleitungen ausgebildet sind. Die Durchgänge sind dabei insbesondere an den Außendurchmesser der jeweiligen Versorgungsleitung angepasst. Die Versorgungsleitungen erstrecken sich durch die Durchgänge und werden so in Position zueinander gehalten. Die Querleisten sind an den Führungssegmenten befestigt oder einstückig mit diesen ausgebildet, so dass auch die Führungsstränge zueinander in Position und auch das Versorgungband insgesamt in einer gewünschten Form und Anordnung gehalten werden.

Eine weitere vorteilhafte Ausgestaltung der Erfindung liegt darin, dass die Querleisten mit Befestigungseinrichtungen, insbesondere Leitungsklemmen, versehen sind, welche zum Fixieren der Versorgungsleitungen an den Querleisten ausgebildet sind. Durch ein zusätzliches Fixieren der Versorgungsleitungen unmittelbar an den Querleisten kann eine Zugentlastung der einzelnen Versorgungsleitungen erreicht werden. Zugbelastungen können über die Querleisten und die Führungsstränge sowie über vorzugsweise vorhandene Zug- oder Tragseile entlang des Versorgungbandes aufgenommen werden. Die Zug- oder Tragseile können in Durchgangskanälen in den Führungssegmenten verlaufen. So können auch unerwünschte Einschnürungen der Versorgungsleitungen beim Auftrommeln verhindert werden. Insgesamt kann so eine Schonung und eine besonders hohe Langlebigkeit der Versorgungsleitungen erzielt werden.

Allgemein können die Versorgungsleitungen in jeder geeigneten Form ausgebildet sein. Bevorzugt ist es nach einer Ausführungsvariante der Erfindung, dass die Versorgungsleitungen als Schlauchleitung zum Leiten einer Flüssigkeit oder eines Gases, als Energieleitung und/oder als Datenleitung ausgebildet sind. Eine Schlauchleitung kann insbesondere zum Leiten von Hydraulikflüssigkeit, Druckluft, einer Kühlflüssigkeit, einer Bohr- oder Frässuspension oder auch zum Leiten einer Suspension mit abgetragenem Bodenmaterial ausgebildet sein. Die Energieleitung kann insbesondere ein metallisches Kabel zum Leiten von elektrischem Strom sein, wobei das Kabel mit einer entsprechenden Isolierung versehen ist. Eine Datenleitung kann ebenfalls eine metallische Leitung oder etwa eine optische Glasfaserleitung sein. Die Leitungen können auch kombiniert miteinander an einem Versorgungsband vorgesehen sein, so dass etwa eine Tiefbaumaschine über das Versorgungsband effizient mit Fluid, Energie sowie Daten versorgt werden kann.

Besonders zweckmäßig ist es nach einer Ausgestaltung der Erfindung, dass das Versorgungsband auf einer Bandtrommel aufgewickelt ist, wobei in einem aufgewickelten Zustand die Wicklungen der seitlichen Führungsstränge jeweils aufeinander liegen. Die Führungsstränge sind kettenartig aus den im Wesentlichen gleich aufgebauten Segmenten gebildet. Die Segmente, welche formstabil aus einem Metall oder Kunststoff gebildet sind, können dabei auf mindestens einem Zug- oder Tragseil gehalten sein, welches sich durch eine oder mehrere Durchgänge an den einzelnen Segmenten entlang des Führungsstranges erstreckt.

An den Segmenten können in grundsätzlich bekannter Weise nut- und federartige Elemente ausgebildet sein, durch welche die Segmente verzahnt und flexibel zueinander gehalten sind, so dass ein Auftrommeln auf einer Bandtrommel ermöglicht ist. Die Bandtrommel kann an einem stationären Grundrahmen oder einem mobilen Trägergerät eines Erdbearbeitungsgerätes angeordnet und drehbar gelagert sein. Vorzugsweise ist die Bandtrommel über mindestens einen Trommelantrieb drehend antriebbar, so dass ein aktives Auftrommeln und Abrommeln des Versorgungsbandes mit der Bandtrommel ermöglicht ist.

Die Querleisten können beabstandet zueinander an beliebigen Stellen des Versorgungsbandes zwischen jeweils zwei, sich in Querrichtung gegenüberliegenden Verbindungssegmenten angeordnet sein. Für ein besonders kompaktes Auftrommeln ist es nach einer Ausführungsvariante der Erfindung vorteilhaft, dass die Querleisten entlang des Versorgungsbandes in der Bandlängsrichtung derart zueinander beabstandet sind, so dass sie in dem aufgewickelten Zustand nicht unmittelbar übereinander liegen. Durch eine derartige verteilte Anordnung der Querleisten entlang des Versorgungsbandes wird verhindert, dass sich beim Auftrommeln des Versorgungbandes zwei Querleisten unmittelbar gegenüberliegen und sich kontaktieren. Vielmehr sind die formstabilen Querleisten so verteilt angeordnet, dass sie sich beim Auftrommeln des Versorgungsbandes stets bei aneinander angrenzenden Wicklungen nicht unmittelbar gegenüberliegen und kontaktieren. Hierdurch kann der Freiraum an der Leitungsanordnung durch die Querleisten effizient genutzt werden.

Grundsätzlich können zum Bilden des Führungsstranges die einzelnen Segmente in jeder geeigneten Weise miteinander verbunden sein. Besonders zweckmäßig ist es nach einer erfindungsgemäßen Ausführungsform, dass entlang jedem Führungsstrang mindestens ein Stahl- oder Tragseil verläuft, welches sich innerhalb der Segmente erstreckt. Die Segmente weisen dabei jeweils Durchgänge auf, durch welche das Stahl- oder Tragseil verläuft. Die Segmente sind somit zum Bilden des Führungsstranges in Position gehalten und es kann gleichzeitig eine Zugentlastung über das Seil erzielt werden.

Die Erfindung umfasst weiterhin ein Erdbearbeitungsgerät, welches dadurch gekennzeichnet ist, dass mindestens ein erfindungsgemäßes Versorgungsband angeordnet ist. Das Erdbearbeitungsgerät kann insbesondere eine Schlitzwandfräse, ein Schlitzwandgreifer, ein Bohrgerät oder eine sonstige Bodenabtragsvorrichtung sein, welche im Betrieb mit mehreren Versorgungsleitungen zur Versorgung von Flüssigkeiten, Gasen, Energie und/oder Daten verbunden sein muss.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine schematische Darstellung zu einem erfindungsgemäßen Versorgungsband;
- Fig. 2: eine vergrößerte Detailansicht einer Querleiste für ein erfindungsgemäßes Versorgungsband;
- Fig. 3: eine Vorderansicht zu der Querleiste von Fig. 2;
- Fig. 4: eine schematische Querschnittsansicht zu einem erfindungsgemäßen Versorgungsband mit aufeinanderliegenden Wicklungen;
- Fig. 5: eine Ansicht entsprechend Fig. 4 zu einem nicht-erfindungsgemäßen herkömmlichen Versorgungsband; und
- Fig. 6: eine schematische Seitenansicht eines Erdbearbeitungsgerätes mit einem erfindungsgemäßen Versorgungsband.

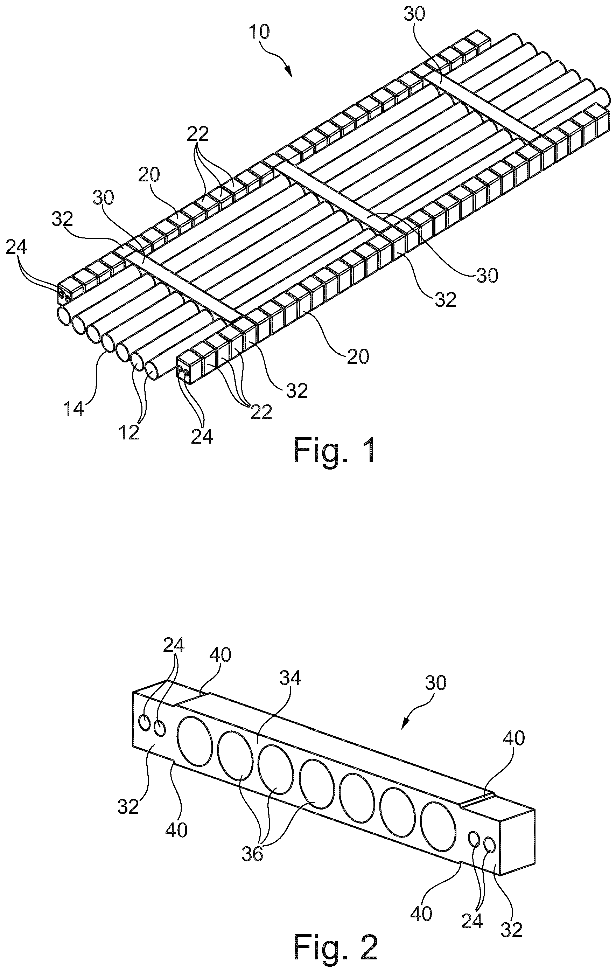

In Fig. 1 ist ein erfindungsgemäßes Versorgungsband 10 mit insgesamt sieben Versorgungsleitungen 12 dargestellt, welche nebeneinander angeordnet sind und eine bandartige Leitungsanordnung 14 bilden. Zu den beiden Randseiten der Leitungsanordnung 14 ist jeweils ein Führungsstrang 20 angeordnet, welcher jeweils aus einer Vielzahl von aneinandergereihten formstabilen Segmenten 22 gebildet ist. Die Segmente 22 können gemäß dem dargestellten Ausführungsbeispiel jeweils zwei Seildurchgänge 24 aufweisen, durch welche Zug- oder Tragseile geführt sind. Hierdurch sind die einzelnen Segmente 22 zum Bilden des jeweiligen Führungsstranges 20 kettenartig mit einer gewissen Flexibilität zueinander angeordnet.

Entlang des Versorgungsbandes 10 sind vereinzelt Querleisten 30 angeordnet, welche sich quer zu einer Bandlängsrichtung zwischen zwei Verbindungssegmenten 32 der Führungsstränge 20 erstrecken.

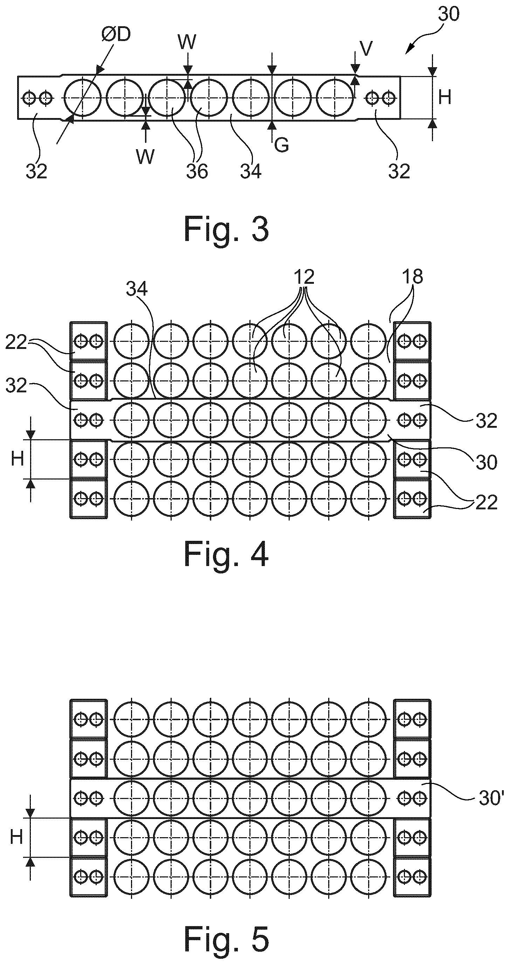

Der Aufbau der einzelnen Querleisten 30 ist in den Figuren 2 und 3 zu erkennen. Die Querleiste 30 ist stangenartig mit einem etwa rechteckigen Querschnitt und einem mittigen Leistenabschnitt 34 ausgebildet, an welchen sich einstückig die Verbindungssegmente 32 anschließen, welche jeweils in dem seitlichen Führungsstrang 20 integriert sind. In dem Leistenabschnitt 34 sind entsprechend der Anzahl und der Größe der aufzunehmenden Versorgungsleitungen 12 Durchgänge 36 eingebracht. Im Bereich der Durchgänge 36 können nicht-dargestellte Befestigungseinrichtungen, etwa Schlauchklemmen, angeordnet sein, um die durchgeführten Versorgungsleitungen 12 an den Querleisten 30 zu befestigen. Dies erhöht die Stabilität des Versorgungsbandes 10 und dient auch einer Zugentlastung der einzelnen Versorgungsleitungen 12. Die Durchgänge können gleich oder unterschiedlich, angepasst an unterschiedliche Leitungsgrößen, ausgebildet sein.

Entsprechend einem maximalen Leitungsdurchmesser LD der aufzunehmenden Versorgungsleitungen 12 sind die Durchmesser der Durchgänge 36 ausgebildet. Zur Vermeidung von Quetschungen der Versorgungsleitungen 12 bei einem Auftrommeln oder Aufwickeln des Versorgungsbandes 10 sind die Führungsstränge 20 mit den Segmenten 22 beziehungsweise 32 mit einer Höhe H ausgebildet, welche um einen definierten Betrag ober Überstand größer als der maximale Leitungsdurchmesser D der Versorgungsleitungen 12 ist. Um die Durchgänge 36 für die einzelnen Versorgungsleitungen 12 zuverlässig aufnehmen zu können, weist die Querleiste 30 im mittigen Leistenabschnitt 34 in einer Höhenrichtung nach außen eine Mindestwandstärke W gegenüber den Durchgängen 36 auf, wie anschaulich in Fig. 3 gezeigt ist. Hierdurch ergibt sich eine Gesamtdicke G der Querleiste 30 im mittigen Leistenabschnitt 34, wobei die Gesamtdicke G größer als die Höhe H der seitlichen Verbindungssegmente 32 der Querleiste 30 ist. Somit ergibt sich am Übergang zwischen den Verbindungssegmenten 32 zum mittigen Leistenabschnitt 34 jeweils ein Absatz 40 mit einem betragsmäßigen Vorsprung V, wie anschaulich in Fig. 3 angegeben ist.

Bei dem Ausführungsbeispiel gemäß den Figuren 2 und 3 ist der Absatz 40 zur Oberseite und zur Unterseite der Querleiste 30 ausgebildet, so dass die Gesamtdicke G des mittigen Leistenabschnitts 34 der Querleiste 30 sich errechnet aus dem Betrag der Höhe H der Verbindungssegmente 32 zuzüglich des zweifachen Betrages des Vorsprungs V an den Absätzen 40. Die Höhe H der Verbindungssegmente 32 ist folglich kleiner als die Gesamtdicke der Querleiste 30 im Bereich des mittigen Leistenabschnitts 34, wobei an den Verbindungssegmenten 32 abgesetzte Bereiche gebildet sind.

Der Vorteil der erfindungsgemäßen Ausgestaltung zeigt sich insbesondere in der schematischen Darstellung gemäß Fig. 4, welche einen Querschnitt zu aufgewickelten Lagen oder Wicklungen 18 zu einem erfindungsgemäßen Versorgungsband 10 zeigen.

Durch den abgesetzten Bereich an den Verbindungssegmenten 32 der Querleiste 30 bestimmt sich die Höhe einer Wicklung allein durch die Höhe H der Segmente 22 beziehungsweise der Verbindungssegmente 32. Der vorspringende Materialbereich an dem mittigen Leistenabschnitt 34 kann dabei in den angrenzenden Freiraum einer angrenzenden Wicklung 18 hineinragen. Der Freiraum der angrenzenden Wicklung 18 ist gebildet durch den definierten Überstand durch die Höhe H der Segmente 22 beziehungsweise der Verbindungssegmente 32 gegenüber dem maximalen Leitungsdurchmesser D der Versorgungsleitungen 12.

Besonders anschaulich wird der mit der erfindungsgemäßen Ausgestaltung erreichte Vorteil gegenüber einem herkömmlichen Versorgungsband, welches mit durchgehenden Querleisten 30' ohne seitlich abgesetzte Bereiche ausgebildet ist, wie es in Fig. 5 dargestellt ist.

Ein derartiges herkömmliches Versorgungsband mit durchgehenden Querleisten 30' kann eine Höhe H aufweisen, welche beispielsweise 80 mm beträgt. Diese Höhe H der Querleisten 30' bestimmt auch die Höhe der weiteren Segmente der seitlichen Führungsstränge und damit die Höhe der einzelnen Wicklungen. Wird ein derartiges Versorgungsband auf eine Bandtrommel mit einem Nabendurchmesser von typischerweise 1450 mm und einem Außendurchmesser von typischerweise 3550 mm aufgetrommelt, ergeben sich bei dieser Höhe H von 80 mm eine mögliche Lagenzahl von 13 und damit eine Aufrollkapazität von 100 Metern an Versorgungsband 10.

Wird dem gegenüber ein erfindungsgemäßes Versorgungsband 10 vorgesehen, bei welchem im Bereich der Verbindungssegmente 32 an den Querleisten 30 zu beiden Seiten eine Dickenreduktion von lediglich 2,5 mm vorgesehen ist, ergibt sich somit eine Höhe H von 75 mm für die Höhe der Segmente 22 und der einzelnen Wicklungen oder Lagen. Bei gleicher Gestaltung der Bandtrommel können so mit dem erfindungsgemäßen Versorgungsband 10 insgesamt 14 Lagen mit einer Gesamtbandlänge von 109 Metern aufgetrommelt werden.

Wird hingegen im Bereich der Verbindungssegmente 32 an den Querleisten 30 zu jeder Seite ein Absatz von 5 mm vorgesehen, ohne dass hierdurch die Festigkeit der Querleiste 30 im mittigen Leistenabschnitt 34 vermindert wäre, so kann bei der weiterhin gleichen Anordnung einer Bandtrommel eine Lagenzahl von 15 und damit eine maximale Aufrollkapazität von 117 Metern an erfindungsgemäßem Versorgungband 10 erzielt werden.

Somit kann durch das erfindungsgemäße Versorgungsband 10 bei einer weiterhin gleichen Ausgestaltung einer Bandtrommel eine deutlich höhere Kapazität an Versorgungsband 10 bereitgestellt werden. Hierdurch kann insbesondere bei einem Erdbearbeitungsgerät eine höhere Leistungsfähigkeit und insbesondere eine größere Bearbeitungstiefe erreicht werden, ohne dass sich hierdurch die Außenabmessungen des Erdbearbeitungsgerätes aufgrund der Bandtrommel ändern würde. Alternativ kann bei einer vorgegebenen Leitungslänge ein geringerer Trommeldurchmesser und damit ein kleineres Transportmaß erreicht werden.

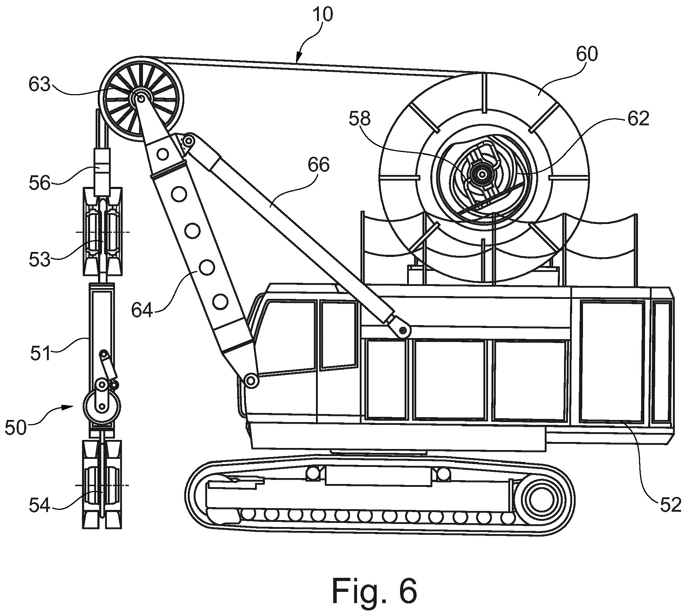

In Fig. 6 ist beispielhaft ein Erdbearbeitungsgerät 50 dargestellt, welches mit einem mobilen Trägergerät 52 ausgebildet ist. Das mobile Trägergerät 52 kann mit einem Raupenfahrwerk ausgebildet sein, auf welchem ein drehbarer Oberwagen gelagert sein kann.

An einer Oberseite des Trägergerätes 52 kann eine Bandtrommel 60 für ein erfindungsgemäßes Versorgungsband 10 drehbar gelagert sein. Die Versorgungsleitungen 12 an dem Versorgungsband 10 sind im Bereich der Nabe der Bandtrommel 60 mit entsprechenden Leitungsanschlüssen 58 des Trägergerätes 52 verbunden.

Am anderen Ende des Versorgungsbandes 10 ist eine Erdbearbeitungsvorrichtung angeschlossen, welche im dargestellten Ausführungsbeispiel als eine Schlitzwandfräse 51 ausgebildet ist. Die hier gezeigte Schlitzwandfräse 51 kann obere Fräsräder 53 und untere Fräsräder 54 aufweisen. Die Schlitzwandfräse 51 kann vorzugsweise nur untere Fräsräder 54 aufweisen. Das Versorgungsband 10 ist zum Führen der Schlitzwandfräse 51 vorzugsweise über eine Umlenkrolle 63 geführt, welche an einem oberen Ende eines Auslegers oder Mastes 64 gehalten ist. Der Ausleger 64 kann über ein Stellorgan 66 verstellt werden. Das Versorgungsband 10 kann über eine Verbindungseinrichtung 56 an der Schlitzwandfräse 51 angeschlossen sein.

## Patentansprüche

1. Versorgungsband, insbesondere für ein Erdbearbeitungsgerät (50), mit
- mindestens zwei nebeneinander angeordneten Versorgungsleitungen (12), welche eine bandartige Leitungsanordnung (14) bilden, wobei die Durchmesser der Versorgungsleitungen (12) einen maximalen Leitungsdurchmesser (D) nicht überschreiten,
- zwei seitlichen Führungssträngen (20), von welchen je ein Führungsstrang (20) entlang jeder Randseite der Leitungsanordnung (14) verläuft und welche jeweils aus formstabilen Segmenten (22) aufgebaut sind, welche bei einem Aufwickeln des Versorgungsbandes (10) übereinanderliegen, wobei zum Schutz der Versorgungsleitungen (12) eine Höhe (H) der Segmente (22) um einen definierten Überstand größer als der maximale Leitungsdurchmesser (D) ist, und
- Querleisten (30), welche vereinzelt entlang des Versorgungsbandes (10) angeordnet sind und sich quer zu einer Bandlängsrichtung von einem Verbindungssegment (32) des ersten seitlichen Führungsstranges (20) zu einem gegenüberliegenden Verbindungssegment (32) des zweiten seitlichen Führungsstranges (20) erstrecken und diese miteinander verbinden,
**dadurch gekennzeichnet,**
- **dass** die Höhe der Verbindungssegmente (32) gleich der Höhe der weiteren Segmente (22) der Führungsstränge (20) ist und
- **dass** die Querleisten (30) im Bereich der Leitungsanordnung (14) der Versorgungsleitungen (12) um einen definierten Vorsprung (V) gegenüber der Höhe der Verbindungssegmente (32) vorstehen.

2. Versorgungsband nach Anspruch 1,
**dadurch gekennzeichnet,**
**dass** der definierte Vorsprung (V) der Querleisten (30) im Bereich der Leitungsanordnung (14) betragsmäßig gleich oder kleiner als der definierte Überstand der Segmente (22) der Führungsstränge (20) gegenüber den Versorgungsleitungen (12) ist.

3. Versorgungsband nach Anspruch 1 oder 2,
**dadurch gekennzeichnet,**
**dass** die Querleisten (30) im Bereich der Leitungsanordnung (14) der Versorgungsleitungen (12) zu beiden Seiten um einen definierten Vorsprung (V) gegenüber der Höhe der Verbindungssegmente (32) vorstehen.

4. Versorgungsband nach einem der Ansprüche 1 bis 3,
**dadurch gekennzeichnet,**
**dass** die Querleisten (30) rahmenartig mit zueinander beabstandeten Durchgängen (36) zum Aufnehmen und Halten der Versorgungsleitungen (12) ausgebildet sind.

5. Versorgungsband nach einem der Ansprüche 1 bis 4,
**dadurch gekennzeichnet,**
**dass** die Querleisten (30) mit Befestigungseinrichtungen, insbesondere Leitungsklemmen, versehen sind, welche zum Fixieren der Versorgungsleitungen (12) an den Querleisten (30) ausgebildet sind.

6. Versorgungsband nach einem der Ansprüche 1 bis 5,
**dadurch gekennzeichnet,**
**dass** die Versorgungsleitungen (12) als Schlauchleitung zum Leiten einer Flüssigkeit oder eines Gases, als Energieleitung und/oder als Datenleitung ausgebildet sind.

7. Versorgungsband nach einem der Ansprüche 1 bis 6,
**dadurch gekennzeichnet,**
**dass** dieses auf einer Bandtrommel (60) aufgewickelt ist, wobei in einem aufgewickelten Zustand die Wicklungen der seitlichen Führungsstränge (20) jeweils aufeinander liegen.

8. Versorgungsband nach Anspruch 7,
**dadurch gekennzeichnet,**
**dass** die Querleisten (30) entlang des Versorgungsbandes (10) in der Bandlängsrichtung derart zueinander beabstandet sind, dass diese in dem aufgewickelten Zustand nicht unmittelbar übereinander liegen.

9. Versorgungsband nach einem der Ansprüche 1 bis 8,
**dadurch gekennzeichnet,**
**dass** entlang jedem Führungsstrang (20) mindestens ein Stahl- oder Tragseil verläuft, welches sich innerhalb der Segmente (22) erstreckt.

10. Erdbearbeitungsgerät (50),
**dadurch gekennzeichnet,**
**dass** mindestens ein Versorgungsband (10) nach einem der Ansprüche 1 bis 9 angeordnet ist.

## Claims

1. Supply belt, in particular for an earth-moving machine (50), comprising
- at least two supply lines (12) arranged next to one another, which form a beltlike line assembly (14), wherein the diameters of the supply lines (12) do not exceed a maximum line diameter (D),
- two lateral guide strands (20), of which in each case one guide strand (20) extends along each edge side of the line assembly (14), and which are each composed of dimensionally stable segments (22) which are located on top of one another when the supply belt (10) is being wound up, wherein a height (H) of the segments (22) is greater than the maximum line diameter (D) by a defined projection amount, in order to protect the supply lines (12), and
- transverse strips (30), which are arranged individually along the supply belt (10) and extend transversely to a belt longitudinal direction from a connecting segment (32) of the first lateral guide strand (20) to an opposite connecting segment (32) of the second lateral guide strand (20) and connect them with one another,
**characterized in that**
- the height of the connecting segments (32) is equal to the height of the other segments (22) of the guide strands (20), and
- the transverse strips (30) in the area of the line assembly (14) of the supply lines (12) project with respect to the height of the connecting segments (32) by a defined projection amount (V).

2. Supply belt according to claim 1,
**characterized in that**
the defined projection amount (V) of the transverse strips (30) in the region of the line assembly (14) is equal to or smaller in value than the defined projection amount of the segments (22) of the guide strands (20) with respect to the supply lines (12).

3. Supply belt according to claim 1 or 2,
**characterized in that**
the transverse strips (30), in the area of the line assembly (14) of the supply lines (12), project with respect to the height of the connecting segments (32) by a defined projection amount (V) on both sides.

4. Supply belt according to any one of claims 1 to 3,
**characterized in that**
the transverse strips (30) are configured in a frame-like manner with passages (36), which are spaced from one another, for receiving and holding the supply lines (12).

5. Supply belt according to any one of claims 1 to 4,
**characterized in that**
the transverse strips (30) are provided with fastening devices, in particular line clamps, which are configured for fixing the supply lines (12) to the transverse strips (30).

6. Supply belt according to any one of claims 1 to 5,
**characterized in that**
the supply lines (12) are configured as a hose line for conducting a liquid or a gas, as an energy line and/or as a data line.

7. Supply belt according to one of claims 1 to 6,
**characterized in that**
the belt is wound on a belt drum (60), wherein the windings of the lateral guide strands (20) are each located on top of one another in a wound-up state.

8. Supply belt according to claim 7,
**characterized in that**
the transverse strips (30) are spaced from one another along the supply belt (10) in the belt longitudinal direction in such a way that they are not located directly on top of one another in the wound-up state.

9. Supply belt according to any one of claims 1 to 8,
**characterized in that**
at least one steel or suspension cable extends along each guide strand (20), which extends within the segments (22).

10. Earth-moving machine (50),
**characterized in that**
at least one supply belt (10) according to any one of claims 1 to 9 is arranged.

## Revendications

1. Bande d'alimentation, notamment pour un engin de terrassement (50), avec
- au moins deux conduites d'alimentation (12) agencées l'une à côté de l'autre, qui forment un agencement de conduites (14) de type bande, les diamètres des conduites d'alimentation (12) ne dépassant pas un diamètre de conduite maximal (D),
- deux brins de guidage latéraux (20), dont un brin de guidage (20) s'étend le long de chaque côté de bord de l'agencement de conduites (14) et qui sont constitués chacun de segments (22) de forme stable, qui se superposent lors d'un enroulement de la bande d'alimentation (10) ; pour la protection des conduites d'alimentation (12), une hauteur (H) des segments (22) étant supérieure d'un dépassement défini au diamètre de conduite maximal (D), et
- des barres transversales (30), qui sont agencées individuellement le long de la bande d'alimentation (10) et s'étendent transversalement à une direction longitudinale de bande d'un segment de liaison (32) du premier brin de guidage latéral (20) à un segment de liaison opposé (32) du deuxième brin de guidage latéral (20) et les relient entre eux,
**caractérisée en ce que**
- la hauteur des segments de liaison (32) est égale à la hauteur des autres segments (22) des brins de guidage (20) et
- **en ce que** les barres transversales (30) font saillie dans la zone de l'agencement de conduites (14) des conduites d'alimentation (12) d'une saillie (V) définie par rapport à la hauteur des segments de liaison (32).

2. Bande d'alimentation selon la revendication 1,
**caractérisée en ce que**
la saillie définie (V) des barres transversales (30) dans la zone de l'agencement de conduites (14) est en valeur égale ou inférieure au dépassement défini des segments (22) des brins de guidage (20) par rapport aux conduites d'alimentation (12).

3. Bande d'alimentation selon la revendication 1 ou 2,
**caractérisée en ce que**
les barres transversales (30) dans la zone de l'agencement de conduites (14) font saillie des deux côtés des conduites d'alimentation (12) d'une saillie définie (V) par rapport à la hauteur des segments de liaison (32).

4. Bande d'alimentation selon l'une quelconque des revendications 1 à 3, **caractérisée en ce que**
les barres transversales (30) sont configurées à la manière d'un cadre avec des passages (36) espacés les uns des autres pour recevoir et maintenir les conduites d'alimentation (12).

5. Bande d'alimentation selon l'une quelconque des revendications 1 à 4, **caractérisée en ce que**
les barres transversales (30) sont pourvues de dispositifs de fixation, notamment de pinces de conduite, qui sont configurés pour fixer les conduites d'alimentation (12) sur les barres transversales (30).

6. Bande d'alimentation selon l'une quelconque des revendications 1 à 5, **caractérisée en ce que**
les conduites d'alimentation (12) sont configurées sous forme de tuyaux pour conduire un liquide ou un gaz, sous forme de conduites d'énergie et/ou sous forme de conduites de données.

7. Bande d'alimentation selon l'une quelconque des revendications 1 à 6, **caractérisée en ce qu'**
elle est enroulée sur un tambour de bande (60), les enroulements des brins de guidage latéraux (20) étant respectivement superposés dans un état enroulé.

8. Bande d'alimentation selon la revendication 7,
**caractérisée en ce que**
les barres transversales (30) sont espacées les unes des autres le long de la bande d'alimentation (10) dans la direction longitudinale de bande de telle sorte qu'elles ne sont pas directement superposées à l'état enroulé.

9. Bande d'alimentation selon l'une quelconque des revendications 1 à 8, **caractérisée en ce qu'**
au moins un câble en acier ou un câble porteur s'étend le long de chaque brin de guidage (20), qui s'étend à l'intérieur des segments (22).

10. Engin de terrassement (50),
**caractérisé en ce qu'**
au moins une bande d'alimentation (10) selon l'une quelconque des revendications 1 à 9 est agencée.
